# EUROPÄISCHE PATENTANMELDUNG

(11) **EP 1 829 837 A1**
(43) Veröffentlichungstag der Anmeldung: **05.09.2007**
(21) Anmeldenummer: 07004206.4
(22) Anmeldetag: 01.03.2007
(51) Int. Cl.: C03C 21/00, C03C 23/00

(54) **Verfahren und Vorrichtung zur Plasmabehandlung von alkali- und erdalkalihaltgen Oberflächen**

(30) Priorität: 01.03.2006 DE 102006009822
(71) Anmelder: Schott AG, 55122 Mainz (DE)
(72) Erfinder: Bicker, Matthias, 55126 Mainz (DE); Rohtaar, Uwe, 67134 Birkenheide (DE); Hormes, Robert, 79379 Müllheim (DE); Hanser, Bernd, 79379 Müllheim (DE); Lohmeyer, Manfred, 55299 Nackenheim (DE); Bauer, Stefan, 55232 Alzey (DE)
(74) Vertreter: Blumbach - Zinngrebe

(57) **Zusammenfassung**

Die Erfindung betrifft ein Verfahren zur Plasmabehandlung von Glasoberflächen, wobei durch eine Plasmabehandlung eines Substrats der Metall-, insbesondere der Alkali-und/oder Erdalkalianteil im oberflächennahen Bereich des Substrates reduziert wird.

## Beschreibung

### Gebiet der Erfindung

Die Erfindung betrifft ein Verfahren zur Behandlung von metallhaltigen, insbesondere alkali- und erdalkalihaltigen Glasoberflächen mittels eines Plasma.

### Hintergrund der Erfindung

Die Verwendung metallhaltiger, insbesondere die Elemente der Alkali- und Erdalkalimetalle, umfassender Gläser ist bei vielen Produkten nicht oder nur eingeschränkt möglich, da beispielsweise durch Diffusions- oder Austauschprozesse Alkali- und Erdalkaliionen aus dem Glas austreten und unerwünschte Wirkungen haben.

Dies betrifft insbesondere Medikamente, welche in alkalihaltigen Glasgefäßen aufbewahrt werden. Besonders bei wässerigen Lösungen kommt es zum Auslaugen der Glasoberfläche, so dass das Medikament mit Alkali- oder Erdalkaliionen verunreinigt wird. Auch bei Displaygläsern kann die Diffusion von Alkali- und Erdalkaliionen in aufgebrachte Halbleiterstrukturen sogar zum Versagen des Displays oder zumindest einzelner Pixel kommen. Dies betrifft insbesondere den Fall, dass während der Herstellung des Displays Hochtemperaturschritte durchgeführt werden, die die Diffusion der Alkali- und Erdalkaliionen erheblich beschleunigen. Es ist daher in vielen Fällen notwendig, die Alkali- und Erdalkalikonzentration zumindest im oberflächennahen Bereich eines Substrates zu reduzieren.

Dies kann bei Glas beispielsweise während der Heißformung erfolgen. So zeigt die EP 1 138 639 ein Verfahren zur Herstellung bei Glasrohren, bei welchem die Rohre unter einer sauerstoffhaltigen Gasatmosphäre heiß geblasen werden. Dabei kommt es zu einer Reduzierung zumindest von Natriumionen an der Glasoberfläche. Nachteilig bei diesem Verfahren ist aber, dass falls in der Produktionskette noch weitere Heißformgebungsschritte erfolgen, Alkaliionen wiederum durch Diffusion an die Oberfläche gelangen können.

Eine weitere Möglichkeit ist, alkalihaltiges Glas mit wässerigen Lösungen, Säuren oder sulfathaltigen Lösungen zu waschen. So ist aus der Praxis beispielsweise bei pharmazeutischen Packmitteln bekannt, die Oberfläche eines Glases mit einer Amoniumsulfatlösung zu spülen, um denGehalt an Metallionen zu reduzieren. Derartige chemische Reinigungs- und Auslaugungsverfahren bergen aber die Gefahr einer Verunreinigung. Eine weitere Gefahr ist, dass durch diese Behandlung das Glasnetzwerk in der Regel zumindest im Oberflächenbereich angegriffen und geschädigt wird, wodurch die Festigkeit des Glases reduziert wird und somit die Rissgefahr des Glases erhöht wird.

Alternativ zum Auslaugen von Substraten können Barriereschichten als Diffusionssperren für Alkali- und Erdalkalielemente aufgebracht werden. Derartige Barriereschichten sind relativ teuer und können nicht in allen Fällen angewendet werden. Beispielsweise kann eine weitere Heißformung des Rohlings zu einer Zerstörung der Barriereschicht führen.

Des Weiteren hat sich herausgestellt, dass es nach dem Stand der Technik vielfach nicht möglich ist, die Konzentration von Alkali- und Erdalkaliionen im oberflächennahen Bereich hinreichend zu senken.

### Aufgabe der Erfindung

Gegenüber dem Stand der Technik ist die Aufgabe der Erfindung, ein zuverlässiges und geeignetes Verfahren zur Reduzierung des Metallgehaltes, insbesondere der Alkali-und Erdalkalielemente, im Oberflächenbereich eines Substrates bereitzustellen.

Weiter ist Aufgabe der Erfindung, ein Verfahren zur Reduzierung des Alkali- und Erdalkaligehaltes im Oberflächenbereich von Glas bereitzustellen, welches die Glasstruktur möglichst wenig schädigt.

Darüber hinaus soll das erfindungsgemäße Verfahren die Bereitstellung eines Substrates mit reduzierter Alkali-oder Erdalkalikonzentration zumindest im oberflächennahen Bereich ermöglichen, wobei das Substrat weiteren Bearbeitungsschritten unterzogen werden kann.

Bei der Durchführung des erfindungsgemäßen Verfahrens soll eine Verunreinigung des Substrates vermieden und eine Temperaturbeanspruchung des Substrates verringert werden.

### Zusammenfassung der Erfindung

Die Aufgabe der Erfindung wird bereits durch ein Verfahren zur Plasmabehandlung von Oberflächen, durch ein Substrat sowie durch eine Vorrichtung zur Plasmabehandlung von Oberflächen nach einem der unabhängigen Ansprüche erreicht.

Bevorzugte Ausführungsformen und Weiterbildungen der Erfindung sind den jeweiligen Unteransprüchen zu entnehmen.

Gemäß der Erfindung ist ein Verfahren zur Plasmabehandlung von Oberflächen vorgesehen. Insbesondere hat die Erfindung die Behandlung von Glasoberflächen zum Gegenstand. Die Erfindung kann aber auch für andere Substrate, insbesondere organische Substrate geeignet sein.

Nach der Erfindung wird ein Substrat mit einer zu behandelnden Oberfläche bereitgestellt, wobei das Substrat metallhaltig ist. Insbesondere weist das Substrat ein oder mehrere Elemente der Alkali- oder Erdalkaligruppen auf. Diese können sowohl in ionischer Form als auch in elementarer Form oder als Verbindungen in dem Substrat vorliegen.

Die Erfinder haben herausgefunden, dass durch Bereitstellen eines Prozessgases oder Prozessgasgemisches und Zünden eines Plasmas mittels des Plasmas der Metallanteil, insbesondere der Alkali- aber auch der Erdalkalianteil zumindest im oberflächennahen Bereich reduziert wird.

Die Erfinder haben herausgefunden, dass Elemente der Alkali- und/oder Erdalkaligruppe nicht durch bloßen Austausch, beispielsweise gegen Stickstoffatome aus der Glasoberfläche herausgelöst werden, sondern dass eine überproportionale Abnahme, die weit über Austauscheffekte hinaus geht, erreicht werden kann.

Die Plasmabehandlung hat besonders gegenüber den Elementen der Alkaligruppe, insbesondere Natrium eine hohe Selektivität, ist bei großem Anlagendurchsatz preiswert durchzuführen und schädigt nicht die Glasoberfläche. Bei einer bevorzugten Ausführungsform wird ein wasserstoffhaltiges Prozessgas bereitgestellt. Unter einem wasserstoffhaltigen Prozessgas im Sinne der Anmeldung werden alle Verbindungen verstanden, die Wasserstoff beinhalten, sowie Gasmischungen, die Wasserstoff oder eine Wasserstoffverbindung beinhalten.

Vorzugsweise erfolgt die Plasmabehandlung als reaktiver Prozess unter Verwendung einer Wasserstoff-haltigen und/oder Halogen-haltigen Verbindung, insbesondere SF6, CF4, CHF3, NF3, C12, HC1, CC14 und/oder HBr.

Aufgrund der Versuchsergebnisse ist davon auszugehen, dass durch eine Plasmabehandlung mit einem wasserstoffhaltigen Prozessgas es zum Austausch von Alkali- und Erdalkaliionen durch Wasserstoffionen zumindest im oberflächennahen Bereich des Substrates kommt. Die Alkali- und Erdalkaliionen gehen dabei sowohl direkt in die Gasphase Bei einer Weiterbildung der Erfindung wird ein stickstoffhaltiges Prozessgas bereitgestellt. Es wird dabei davon ausgegangen, dass der durch das Plasma aktivierte Stickstoff an der Glasoberfläche eine Siliziumstickstoffbindungbildet.

Als besonders geeignetes Prozessgas hat sich Ammoniak erwiesen, welches sowohl Stickstoff als auch Wasserstoff umfasst und mit welchem sich gut ein Plasma zünden lässt.

Alternativ oder in Kombination können als Prozessgas insbesondere auch Wasserstoff oder Wasserdampf verwendet werden.

Zur Verbesserung der Zündfähigkeit des Plasmas ist bei einer Weiterbildung der Erfindung vorgesehen, dem Prozessgas ein Edelgas, insbesondere Argon oder Krypton zuzumischen.

Zur Erhöhung einer gleichmäßigen Temperaturverteilung kann ein Inertgas, insbesondere Stickstoff zugemischt werden, wie es bei einer Weiterbildung der Erfindung vorgesehen ist.

Zum Aufheizen des Substrates auf Prozesstemperatur oder zum Reinigen oder Oxidieren der Oberfläche ist des Weiteren vorgesehen, ein Reaktivgas, insbesondere Sauerstoff zuzumischen.

Während der Plasmabehandlung liegt die Substrattemperatur insbesondere an der Substratoberfläche, die dem Plasma ausgesetzt ist, mindestens 50°C unter der Glasübergangstemperatur des Substrates.

Vorzugsweise beträgt die Temperatur des Substrates, insbesondere an der Substratoberfläche während der Plasmabehandlung 50 bis 500°C, besonders bevorzugt 120 bis 400°C. Durch derart niedrige Temperaturen wird weitgehend vermieden, dass Metallionen, insbesondere Alkali- und Erdalkaliionen von tieferen Schichten des Substrates an die Oberfläche diffundieren.

Das erfindungsgemäße Verfahren kann mit niedrigen Temperaturen durchgeführt werden, dass Gläser thermisch kaum belastet werden und Spannungen im Glas weitgehend vermieden werden. Auch der Einsatz bei organischen Kunststoffsubstraten ist im Prinzip möglich.

Bei einer bevorzugten Ausführungsform des Verfahrens wird als Substrat ein Hohlkörper bereitgestellt. In den Hohlkörper wird das Prozessgas eingeleitet und durch das erfindungsgemäße Verfahren mittels einer Plasmabehandlung die Konzentration von Alkali- und Erdalkaliionen an der Innenoberfläche des Hohlkörpers reduziert.

So können Verpackungen, insbesondere Flaschen bereitgestellt werden, die beim Füllen mit einer wässerigen Flüssigkeit weniger Alkali- und Erdalkaliionen an die Flüssigkeit abgeben.

Bei einer besonderen Ausführungsform der Erfindung erfolgt die Plasmabehandlung bei einem Druck von über 300 mbar, bevorzugt von über 600 mbar und besonders bevorzugt bei etwa Atmosphären-Druck. Bei derartigen Druckbereichen kann auf lange Evakuierungszeiten verzichtet und so der Anlagendurchsatz gesteigert werden.

Es hat sich herausgestellt, dass zur Zündung des Plasmas elektromagnetische Wellen in bestimmten Frequenzbereichen besonders geeignet sind. Insbesondere ist eine Mittelfrequenz im Bereich von 1 bis 100kHz oder eine Hochfrequenz im Bereich von 10 bis 20 MHz, vorzugsweise 13,56 MHz in Form einer dielektrischen Barriere-Entladung oder eines Plasma-Jet-Verfahren vorgesehen.

Alternativ kann eine Mikrowelle mit einer Frequenz von über 1 GhHz, vorzugsweise eine Hochfrequenz von 2,45GHz mit einem atmosphärischen Mikrowellen-Plasma-Brenner verwendet werden.

Das Plasma wird dabei vorzugsweise durch elektromagnetische Strahlung, insbesondere durch elektromagnetische Strahlung mit einer Frequenz zwischen 10 kHz und 300 GHz gezündet.

Geeignet sind insbesondere Mikrowellen mit einer Frequenz zwischen 1,5 und 5,2 GHz.

Bei einer bevorzugten Ausführung werden Mikrowellen mit einer Frequenz von 2,45 GHz verwendet.

Um die Abgabe von Alkali- und Erdalkaliionen noch weiter zu reduzieren, kanndie Oberfläche nach der Plasmabehandlung noch mit einer Barriereschicht, insbesondere einer SiOₓ-Barriereschicht versehen werden, wie es bei einer Weiterbildung der Erfindung vorgesehen ist,. Eine derartige Barriereschicht vermindert die Diffusion von möglichen im Oberflächenbereich des Substrates verbliebenen oder später in den Oberflächenbereich diffundierten Alkali- oder Erdalkaliionen.

Vorzugsweise wird eine derartige Barriereschicht in einem folgenden Prozesssschritt etwa durch ein Abscheideverfahren, insbesondere ein CVD- oder PVD-Verfahren abgeschieden.

Geht es nur um den Ausschluss bestimmter Metallionen, insbesondere von Natriumionen, bietet sich auch an, eine metallhaltige Beschichtung, insbesondere ein titan-, silizium- oder aluminiumhaltige Beschichtung aufzubringen.

Für die Oberflächenkonditionierung sind als PlasmaBehandlungsvorrichtungen besonders solche gut geeignet, die überlicherweise auch für die Herstellung von dünnen Schichten mit einem PECVD(Plasma-Enhanced Chemical Vapor Deposition)-Verfahren verwendet werden können.Mit diesen Plasmabehandlungsvorrichtungen kann ein hochenergetisches Plasma erzeugt werden, bei dem die Substrattemperatur aber während der Plasmabehandlung recht niedrig gehalten werden kann.

Zur Zündung des Plasmas können neben oder anstatt Mikrowellen auch Radiowellen insbesondere mit einer Frequenz zwischen 150 kHz und 110 MHz verwendet werden. Eine bevorzugte Ausführungsform des Verfahrens verwendet Radiowellen mit einer Frequenz von 13,56 MHz.

Bei einer Weiterbildung der Erfindung wird das Plasma gepulst, insbesondere unter Pulsen einer das Plasma erzeugenden elektromagnetischen Strahlung.

So kann ein hochenergetisches Plasma bei nur kleiner mittlerer Leistung erzeugt werden. Das Substrat wird dadurch nicht heiß. Die Ionenbeweglichkeit im Substrat bleibt klein, so dass die Diffusion von tief unter der Substratoberfläche liegenden Ionen in Oberflächenbereiche weitgehend vermieden wird.

Die Pulsdauer beträgt dabei vorzugsweise zwischen 0,1 und 10 ms, besonders bevorzugt zwischen 0,3 und 5 ms, bei Pulspausen zwischen 2 und 200 ms, vorzugsweise zwischen 5 und 50 ms. Innerhalb dieser Bereiche kann das Verfahren auf verschiedene Substrate angepasst werden. So können beispielsweise bei Substraten, die thermisch höher belastet werden können, geringere Pulspausen eingelegt werden und das Substrat mit einer höheren mittleren Energie behandelt werden.

Bei einer Weiterbildung der Erfindung wird das Substrat, insbesondere vor der Plasmabehandlung, gereinigt. Bereits bei einer Vorreinigung des Substrates kommt es zum Auswaschen von Alkali- und Erdalkaliionen. Die Vorreinigung wird vorzugsweise mit reinem, etwa demineralisiertem Wasser durchgeführt.

Alternativ können auch Säuren verwendet werden. Insbesondere ist eine Salzsäureverdünnung gut geeignet, da verdünnte Salzsäure wenig zu Verunreinigungen des Substrates führt. Eine weitere Reinigung kann nach dem Plasmabehandeln des Substrates durchgeführt werden.

Durch die Plasmabehandlung wird zumindest der Alkali- und Erdalkalianteil bis zu einer Tiefe von mindestens 3 nm, vorzugsweise bis zu einer Tiefe von mindestens 20 nm und besonders bevorzugt bis zu einer Tiefe von mindestens 30 nm derart reduziert, dass zumindest in Bezug auf ein Element der Alkali- oder Erdalkaligruppe eine Reduzierung um den Faktor 1,2, vorzugsweise 2,0 und besonders bevorzugt 4,0 erreicht wird.

Durch daserfindungsgemäße Plasmabehandlungsverfahren ist es sogar möglich, bis in Tiefen von über 30 nm den Alkali- und Erdalkalianteil, vorzugsweise den Natriumanteil, signifikant zu reduzieren.

Bei der Behandlung wird eine Substrattemperatur von 400°C, bevorzugt von 200°C und besonders bevorzugt von 150°C nicht überschritten.

Die Plasmabehandlung erfolgt vorzugsweise über einen Zeitraum von 1 Sekunde bis drei Stunden und besonders bevorzugt von 35 Sekunden bis 10 Minuten.

Die Erfindung betrifft im übrigen die Verwendung eines Verfahrens zur Plasmabehandlung von Oberflächen zur Reduzierung des Alkali- und Erdalkalianteils, zumindest in einem oberflächennahen Bereich des Substrates.

Weiterhin betrifft die Erfindung ein Substrat, welches mit einem Verfahren zur Plasmabehandlung von Oberflächen herstellbar ist.

Das Substrat umfasst vorzugsweise einen Hohlkörper. Insbesondere ist vorgesehen, das Verfahren für pharmazeutische Packmittel, insbesondere Fläschchen, Ampullen und Spritzen zu verwenden.

Auch für Halbzeuge für pharmazeutische Packmittel, wie beispielsweise Rohre, die durch einen Heißformprozess während oder nach der Befüllung geschlossen werden, ist die Erfindung vorgesehen.

Weiter eignet sich das erfindungsgemäße Verfahren zur Reduzierung des Alkali- und Erdalkalianteils in Displaygläsern. So wird verhindert, dass insbesondere Natriumionen in die an das Displayglas angrenzenden Halbleiterstrukturen diffundieren.

Ein weiteres Anwendungsgebiet ist die Verwendung des Verfahrens für Glühlampen oder Metalldampflampen. Durch die Plasmabehandlung wird der Metall, vorzugsweise Alkali- oder Erdalkalianteil zumindest im oberflächennahen Bereich eines Lampenkolbens reduziert. Dadurch kann die Lebensdauer der Lampe erhöht werden, da im Betrieb weniger Metallatome an die Glasoberfläche diffundieren und von dort verdampfen können. Vedampfte Metallatome können in anderen, kühleren Zonen der Lampe kondensieren und dabei die Lampe schädigen.

Als Substrat wird bei einer besonderen Ausführungsform des Verfahrens ein alkali- oder erdalkalihaltiges Glassubstrat verwendet, welches 10 bis 40 at-% Silizium, 20 bis 70 at-% Sauerstoff, 0,05 bis 10 at-% Bor, 0,01 bis 5 at-% Fluor und 0,05 bis 10 at-% Aluminium umfasst. Es versteht sich, dass noch weitere Bestandteile enthalten sein können. Unter at-% wird im Sinne der Anmeldung die Anzahl der Atome des jeweiligen Elementes geteilt durch die Gesamtzahl der Atome des Stoffes verstanden.

Der Natriumanteil in einem Plasma-behandelten Bereich beträgt bis in eine Tiefe von 30 nm weniger als 5 at-%, vorzugsweise weniger als 1 at-% und besonders bevorzugt weniger als 0,3 at-%. Im nicht plasmabehandelten Bereich des Substrates liegt der Natriumanteil dagegen zwischen 0,1 und 30 at-%, bevorzugt zwischen 10 und 20 at-%.

Auch der Kalziumanteil wird durch das erfindungsgemäße Verfahren signifikant reduziert. So liegt der Kalziumanteil bis in eine Tiefe von 3 nm bei weniger als 2 at-%, vorzugsweise bei weniger als 0,7 at-% und besonders bevorzugt bei weniger als 0,3 at-%. Dagegen liegt der Kalziumanteil in dem nicht plasmabehandelten Bereich des Substrates zwischen 0,05 und 30 at-%, bevorzugt zwischen 3 und 20 at-%.

Weiter beträgt der Stickstoffanteil in einem plasmabehandelten Bereich des Substrates bis in eine Tiefe von zumindest 3 nm mehr als 1 at-%, vorzugsweise mehr als 2 at-%, besonders bevorzugt mehr als 4 at-%. Der Stickstoffanteil in einem nicht plasmabehandelten Bereich des Substrates ist dagegen geringer als im Plasmabehandelten Bereich und liegt unter 10 at-%, vorzugsweise unter 4 at-% und besonders bevorzugt unter 1 at-%. Es ist davon auszugehen, dass die Änderung des Stickstoffanteils aufgrund von sich bildenden Siliziumstickstoffbindungen an der Oberfläche des Substrates während der Plasmabehandlung erfolgt.

Eine bei einer bevorzugten Ausführungsform der Erfindung aufgebrachte Barrierebeschichtung, insbesondere eine abgeschiedene SiOₓ-Schicht umfassend, hat eine Dicke zwischen 2 nm und 1 um, vorzugsweise zwischen 5 nm und 300 nm.

Die Erfindung betrifft des weiteren eine Medikamentenverpackung, insbesondere als Fläschchen, Spritze oder Ampulle, umfassend ein erfindungsgemäßes Substrat.

Weiter betrifft die Erfindung ein Display, insbesondere ein TFT-Display, umfassend ein erfindungsgemäßes Substrat.

Weiter betrifft die Erfindung einen Lampenkolben, insbesondere für eine Glühlampe oder Metalldampflampe, umfassend ein erfindungsgemäßes Substrat.

Die Erfindung betrifft des Weiteren eine Vorrichtung zur Plasmabehandlung von Oberflächen, insbesondere zur Durchführung eines erfindungsgemäßen Verfahrens. Die Vorrichtung zur Plasmabehandlung umfasst eine Substrataufnahme, eine Zuführung zum Einleiten von Prozessgas und eine Einrichtung zur Erzeugung eines Plasmas.

Gemäß der Erfindung weist die Vorrichtung zur Plasmabehandlung zumindest eine Zuführung zum Einleiten von Ammoniak und einen Vorratsbehälter für Ammoniak auf. Bei einer bevorzugten Ausführungsform der Vorrichtung zur Plasmabehandlung ist die Substrataufnahme zur Aufnahme von Hohlkörpern mit einer Öffnung ausgebildet. Der Hohlkörper liegt dabei im aufgenommenen Zustand im Wesentlichen fluiddicht, etwa durch eine Dichtung, mit seiner Öffnung an der Substrataufnahme an. Durch die Öffnung des Hohlkörpers wird der Hohlkörper vor der Plasmabehandlung evakuiert und das Prozessgas eingeleitet.

### Kurzbeschreibung der Zeichnungen

Die Erfindung soll im Folgenden unter Bezugnahme auf die Zeichnungen Fig. 1 bis Fig. 4 anhand von Ausführungsbeispielen näher erläutert werden.

Es zeigen:
- Fig. 1: ein SIMS-Intensitäts-Sputterzeitprofil eines unbehandelten Glasfläschchens,
- Fig. 2: ein SIMS-Intensitäts-Sputterzeitprofil eines mit einem NH₃-plasmabehandelten Glasfläschchens,
- Fig. 3: eine erfindungsgemäße Vorrichtung zur Plasmabehandlung,
- Fig. 4: die wesentlichen Verfahrensschritte bei der Durchführung eines Verfahrens zur Plasmabehandlung.

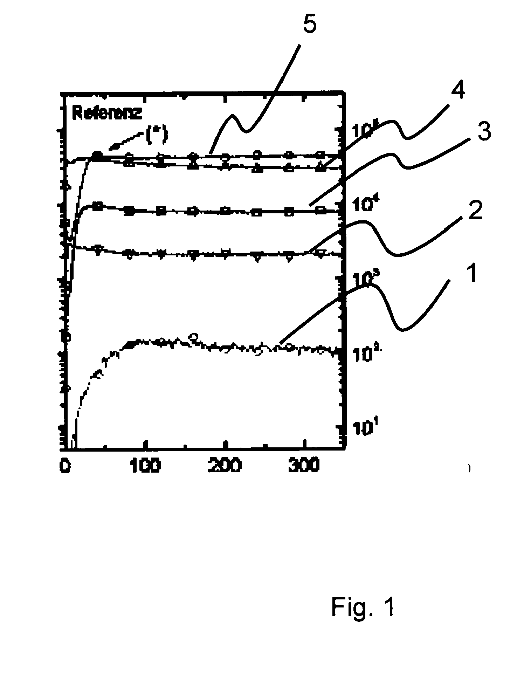

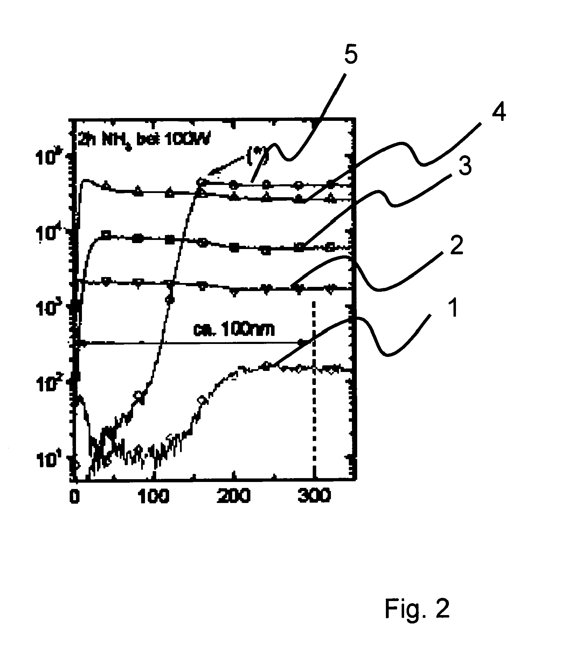

Gemäß des ersten Ausführungsbeispiels, bei welchem auf die Zeichnungen Fig. 1 und Fig. 2 Bezug genommen wird, wurde ein Glasfläschchen aus Borosilikatglas (Typ FIOLAX der Firma Schott) mit einem Volumen von 10 ml, einer Höhe von 40 mm und einem Durchmesser von 22 mm (DIN ISO 8362, Normgröße 6R) mit deionisiertem Wasser bei einer Temperatur von 60° gereinigt und getrocknet. Anschließend wurde das Glasfläschchen in einePlasmabehandlungsvorrichtung eingebracht. Der Innenraum des Fläschchens wurde auf einen Druck von unter 0,5 mbar evakuiert. Dabei liegt das Fläschchen im Wesentlichen fluiddicht in der Beschichtungsanlage an. Der Bereich außerhalb des Fläschchens bleibt auf Atmosphärendruck.

Bei der in diesem Ausführungsbeispiel verwendeten Anlage zur Plasmabehandlung handelt es sich um ein Doppelplatzmodul, bei welchem jeweils zwei Fläschchen gleichzeitig behandelt werden. Die Anlage umfasst einen Mikrowellengenerator zur Plasmaerzeugung.

Während die Verbindung zum Vakuum beibehalten bleibt, wird über ein Einlassventil ein Reaktionsgas aus Ammoniak bei einem Fluss von 100 sccm (Standard-Kubikzentimer pro Minute) und einem Druck von 0,7 mbar eingeleitet. Nach einer Stabilisierungsphase des Glasflusses von 20 sec wird von der Mikrowellenquelle gepulste Mikrowellenenergie mit einer Frequenz von 2,45 GHz
und einer gesamten mittleren Mikrowellenleistung von 100 W in die beiden Reaktorkammern eingekoppelt. Im Innenraum der beiden Fläschchen wird ein Plasma gezündet, während außenseitig aufgrund des Atmosphärendrucks kein Plasma zündet. Die Dauer der Plasmabehandlung der Innenseite beträgt bei diesem Ausführungsbeispiel 2 Stunden.

Die Maximaltemperatur während dieser Plasmabehandlung beträgt 170°C. Am Ende der Behandlung wird die Mikrowellenenergie unterbrochen, das Prozessgas abgeschaltet und der Innenraum der Fläschchen auf Atmosphärendruck gebracht.

Anschließende werden die Fläschchen mit destilliertem Wasser gefüllt und bei etwa 121 °C eine Stunde lang autoklaviert. Nach dieser Behandlung wird für die Natriumauslaugung ein Wert von 0,22 µg/ml gemessen. Für gewaschene aber ansonsten nicht behandelte Referenzfläschchen lag die Natriumauslaugung mit 0,72 µg/ml um mehr den als einen Faktor 3 höher.

Fig. 1 zeigt ein SIMS-(Secondary Ion Mass Spectrometry) Intensitäts-Sputterzeitprofil eines gewaschenen aber ansonsten unbehandelten Fläschchens. Die x-Achse gibt dabei die Sputterzeit in Sekunden an, während die y-Achse die Zählrate des Detektors wiedergibt.

Für folgende Stoffe wurden Kurven aufgenommen:
Bezugszeichen 1 zeigt das Profil von NaO
Bezugszeichen 2 zeigt das Profil von Si-30
Bezugszeichen 3 zeigt das Profil von B
Bezugszeichen 4 zeigt das Profil von A1
Bezugszeichen 5 zeigt das Profil von Na.

Eine Sputterzeit von 300 Sekunden entspricht dabei etwa einer Tiefe von 100 nm.

Wie in Fig. 1 zu erkennen ist, ist besonders bei NaO und Na auch bei dem gewaschenen Fläschchen eine durch den Waschprozess bedingte, leichte Auslaugung im Oberflächenbereich zu beobachten. Sämtliche Kurven steigen aber steil an, das heißt, dass bereits in einer Tiefe von wenigen Nanometern die Konzentration der Ionen stark ansteigt. Da bei Lagerung von wässrigen Lösungen eine Ionenauslaugung auch aus tieferen Bereichen der oberflächennahen Zone erfolgt, ist das durch den Waschprozess erzielte Natrium-Profil noch nicht optimal.

Fig. 2 zeigt die Tiefenprofile eines plasmabehandelten Fläschchens, das ansonsten wie das Fläschen entsprechend Fig. 1 behandelt wurde. Wie erkennbar ist, führt die Plasmabehandlung zu einer deutlichen Verarmung von Alkali-und Erdalkalielementen, insbesondere von Natrium, im Oberflächenbereich. So weisen die Na- und NaO-Profile der behandelten Proben im Vergleich zu den unbehandelten Proben deutlich geringe Intensitäten auf, insbesondere innerhalb der ersten 50 Nanometer (entspricht einer Sputterzeit bis 150 Sekunden). Für die Bestandteile der Glasmatrix, nämlich B, A1 und Si sind die Profile dagegen weitgehend unverändert, was auf eine sehr gute Selektivität besonders gegenüber Natrium hindeutet. In Fig. 1 erreicht das Natriumprofil bereits nach einer Sputterzeit von unter 50 Sekunden die maximale Zählrate des Detektors, wohingegen dieser Wert in Fig. 2 erst nach etwa 150 Sekunden erreicht wird.

Dieses Ergebnis wird auch durch eine Messung auf Basis der X-Ray Photoelectron Spectroscopy (XPS-Analyse) der gleichen Probe bestätigt, bei der die Glaszusammensetzung bis zu einer Tiefe von etwa 3 nm bestimmt werden kann. Es ergeben sich dabei folgende Werte (alle Angaben in at-%):

| **Element** | **unbehandelt** | **plasmabehandelt** |
|---|---|---|
| B | 1,2 | 0,5 |
| C | 9,0 | 7,9 |
| N | 0, 8 | 16,6 |
| O | 59, 8 | 45,1 |
| F | 0,1 | 1,6 |
| Na | 1,1 | 0,1 |
| A1 | 3,1 | 2,3 |
| Si | 23,3 | 25,8 |
| Ca | 0,6 | 0,1 |

Die XPS-Analyse zeigt also ebenfalls, dass die plasmabehandelte Oberfläche deutlich zumindest im Gehalt an Natriumionen verarmt ist und dass zusätzlich Stickstoff in der oberflächennahen Zone angereichert ist. Während die unbehandelte Probe an der Oberfläche eine Natriumkonzentration von 1,1 at-% aufweist, liegt diese nach der Plasmabehandlung mit Ammoniak bei lediglich 0,1 at-%. Die Natriumkonzentration im Volumen des Substrats liegt mit
4,5 at-% deutlich höher.

Auch für Kalzium ergibt sich eine signifikant reduzierte Konzentration: 0,1 at-% gegenüber 0,6 at-% für die unbehandelte Probe. Durch die Plasmabehandlung wurde die Oberfläche ferner mit etwa 16 at-% Stickstoff angereichert.

Das erfindungsgemäße Verfahren eignet sich also nicht nur für eine Reduzierung der Alkali- und Erdalkalianteile an der Oberfläche, sondern kann auch für eine Härtung von Glasoberflächen durch den Einbau von Stickstoffatomen eingesetzt werden.

Im Vergleich dazu wird durch die Ammoniakplasmabehandlung die Silizium-Konzentration kaum verändert. Die Abnahme für die Elemente Aluminium und Bor fällt geringer aus, als die bei Alkali- und Erdalkalielementen.

Bezüglich eines zweiten Ausführungsbeispiels, bei dem in erster Linie die Prozesszeit optimiert ist, wird bezüglich des Aufbaus auf das vorstehende beschriebene erste Ausführungsbeispiel verwiesen.

Statt einer Mikrowellenleistung von 100 W wird gemäß des zweiten Ausführungsbeispiels aber mit einer Mikrowellenleistung von etwa 1300 W ein Plasma in den beiden Reaktorkammern mit einer gepulsten Mikrowellenquelle gezündet. Die Dauer der Plasmabehandlung beträgt dabei lediglich 30 Sekunden. Während der Behandlung steigt die Temperatur des Borosilikat-Fläschchens in Folge der hohen mittleren Leistung auf 400°C. Die Erfinder haben herausgefunden, dass sich auch bei diesem sehr kurzen Prozess eine ausgeprägte Natriumverarmung in der oberflächennahen Glaszone ergibt.

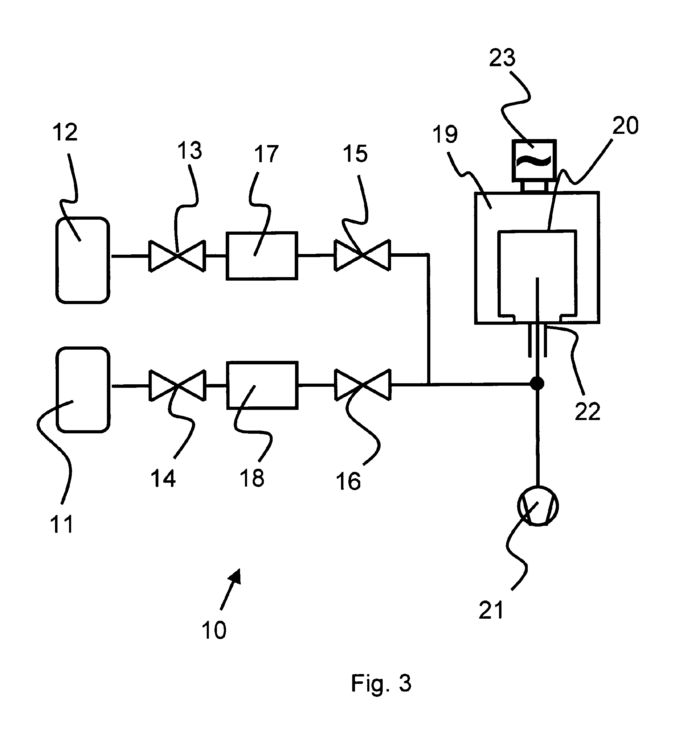

Im Folgenden wird Bezug genommen auf Fig. 3, die schematisch eine erfindungsgemäße Vorrichtung zur Plasmabehandlung 10 zeigt. Die Vorrichtung zur Plasmabehandlung 10 umfasst einen Vorratsbehälter für Stickstoff 11 und einen weiteren Vorratsbehälter 12 zur Beimischung eines weiteren Prozessgases, beispielsweise Argon, Stickstoff oder Sauerstoff. Die beiden Vorratsbehälter 11, 12 sind über Ventile 13, 14, 15, 16, die mit jeweils einem Massenflussregler 17, 18 gekoppelt sind, mit der Reaktorkammer 19 verbunden. Über die Massenflussregler 17, 18 kann so ein definiertes Prozessgasgemisch mit einem definierten Volumenbeziehungsweise Massestrom eingestellt werden. In der Reaktorkammer 19 ist ein Substrat 20 in Form einer Flasche im Wesentlichen fluiddicht an einer Durchführung 22 angeordnet. Das Substrat 20 wird mittels einer Vakuumpumpe 21 evakuiert. Sodann wird das Prozessgas in das Substrat 20 eingeleitet. Über eine Mikrowellenquelle 23 werden Mikrowellen in die Reaktorkammer 19 eingekoppelt. Aufgrund des außerhalb des Substrats herrschenden Atmosphärendrucks wird nur im Innenraum des Substrats ein Plasma gezündet.

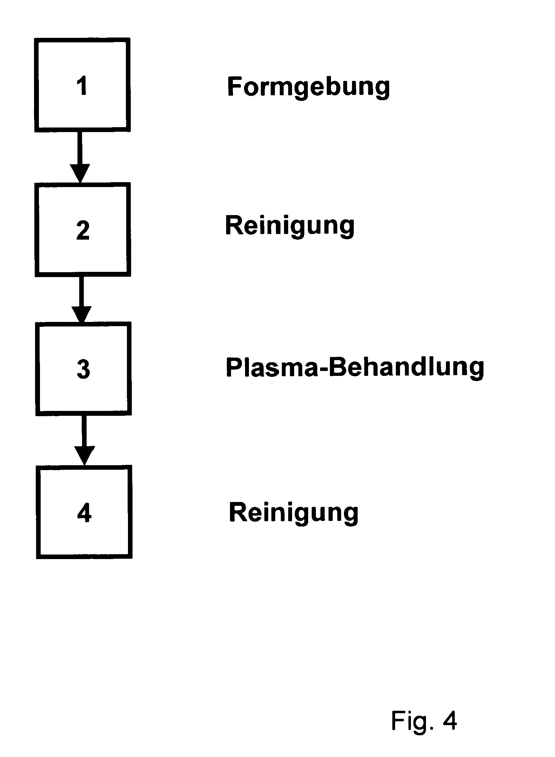

Fig. 4 zeigt schematisch die wesentlichen Schritte einer Ausführungsform eines erfindungsgemäßen Verfahrens. Als erster Schritt wird einem Glassubstrat die Form gegeben. Es kann sich dabei auch um ein Halbzeug handeln, welches nach Durchführung des Verfahrens noch weitere Formgebungsschritte, insbesondere Heißformgebungsschritte durchläuft. Als nächster Schritt ist eine Reinigung des Substrats, vorzugsweise in reinem Wasser vorgesehen. Dabei werden schon Alkali- und Erdalkaliionen im oberflächennahen Bereich herausgelöst. Sodann erfolgt die Plasmabehandlung des Substrats mittels eines erfindungsgemäßen Verfahrens. Nachfolgend kann das Substrat, vorzugsweise in der gleichen Vorrichtung, mit einer Barriere-Schicht beschichtet werden.

Optional kann das Substrat nochmals in einem vierten Schritt gereinigt werden. Dieser Verfahrensschritt ist aber nicht zwingend notwendig. Die Reinigung erfolgt wiederum durch reines Wasser. Eventuell auf der Oberfläche noch anhaftende Alkali- und Erdalkaliionen werden dabei im Wesentlichen abgelöst.

Es versteht sich, dass die Erfindung nicht auf die Kombination der Merkmale der hier aufgeführten Ausführungsbeispiele beschränkt ist. Vielmehr wird der Fachmann, je nach konkreter Anforderung, die gemäß der Erfindung beschriebenen Merkmale kombinieren, soweit dies sinnvoll ist.

### Bezugszeichenliste

- 1: Tiefenprofil NaO
- 2: Tiefenprofil Si30
- 3: Tiefenprofil B
- 4: Tiefenprofil A1
- 5: Tiefenprofil Na
- 10: Vorrichtung zur Plasmabehandlung
- 11: Vorratsbehälter Stickstoff
- 12: weiterer Vorratsbehälter
- 13-16: Regelventile
- 17-18: Massenflussregler
- 19: Reaktorkammer
- 20: Substrat
- 21: Vakuumpumpe
- 22: Durchführung
- 23: Mikrowellenquelle

## Patentansprüche

1. Verfahren zur Plasmabehandlung von Oberflächen, insbesondere von Glasoberflächen, umfassend die Schritte
- Bereitstellen eines Substrats mit mindestens einer zu behandelnden Oberfläche, wobei das Substrat zumindest abschnittsweise metallhaltig, insbesondere alkali-und/oder erdalkalimetallhaltig ist,
- Bereitstellen zumindest eines Prozessgases oder Prozessgasgemisches, vorzugsweise derart, dass die zu behandelnde Oberfläche mit dem Prozessgas in Kontakt kommt,
- Zünden eines Plasmas,
- Reduzieren des Metall-, insbesondere des Alkali-und/oder Erdalkalianteils durch das Plasma.

2. Verfahren zur Plasmabehandlung von Oberflächen nach Anspruch 1, **dadurch gekennzeichnet, dass** ein wasserstoffhaltiges und/oder stickstoffhaltiges Prozessgas bereitgestellt wird.

3. Verfahren zur Plasmabehandlung von Oberflächen nach einem der vorstehenden Ansprüche, **dadurch gekennzeichnet, dass** das Prozessgas Ammoniak umfasst, insbesondere aus Ammoniak besteht.

4. Verfahren zur Plasmabehandlung von Oberflächen nach Anspruch 1, **dadurch gekennzeichnet, dass** die Plasmabehandlung als reaktiver Prozess unter Verwendung einer Wasserstoff-haltigen und/oder Halogen-haltigen Verbindung, insbesondere SF6, CF4, CHF3, NF3, C12, HCl, CC14 oder HBr durchgeführt wird.

5. Verfahren zur Plasmabehandlung von Oberflächen nach einem der vorstehenden Ansprüche **dadurch gekennzeichnet, dass** das Prozessgasgemisch eine Sauerstoff-haltige Verbindung, vorzugsweise Sauerstoff enthält.

6. Verfahren zur Plasmabehandlung von Oberflächen nach einem der vorstehenden Ansprüche, **dadurch gekennzeichnet, dass** als Substrat ein Glassubstrat bereit gestellt wird und die Substrattemperatur während der Plasmabehandlung, insbesondere an der Substratoberfläche, mindestens 50 °C unterhalb der Glasübergangstemperatur des Substrates liegt.

7. Verfahren zur Plasmabehandlung von Oberflächen nach einem der vorstehenden Ansprüche, **dadurch gekennzeichnet**, die Temperatur des Substrats, insbesondere an der Substratoberfläche, während der Plasmabehandlung zwischen 50 und 500 °C, vorzugsweise zwischen 120 und 400 °C liegt.

8. Verfahren zur Plasmabehandlung von Oberflächen nach einem der vorstehenden Ansprüche, **dadurch gekennzeichnet, dass** als Substrat ein Hohlkörper bereit gestellt wird.

9. Verfahren zur Plasmabehandlung von Oberflächen nach einem der vorstehenden Ansprüche, **dadurch gekennzeichnet, dass** die Plasmabehandlung bei einem Druck von über 300 mbar, bevorzugt von über 600 mbar und besonders bevorzugt bei etwa Atmosphären-Druck durchgeführt wird.

10. Verfahren zur Plasmabehandlung von Oberflächen nach einem der vorstehenden Ansprüche, **dadurch gekennzeichnet, dass** eine Mittelfrequenz im Bereich von 1 bis 100kHz oder eine Hochfrequenz im Bereich von 10 bis 20 MHz, vorzugsweise 13,56 MHz, insbesondere in Form einer dielektrischen Barriere-Entladung oder eines Plasma-Jet-Verfahren verwendet wird.

11. Verfahren zur Plasmabehandlung von Oberflächen nach einem der vorstehenden Ansprüche, **dadurch gekennzeichnet, dass** eine Hochfrequenz von über 1 GHz, vorzugsweise eine Hochfrequenz von 2,45GHz mit einem atmosphärischen Mikrowellen-Plasma-Brenner verwendet wird.

12. Verfahren zur Plasmabehandlung von Oberflächen nach einem der vorstehenden Ansprüche, **dadurch gekennzeichnet, dass** die Oberfläche nach der Plasmabehandlung zumindest abschnittsweise, insbesondere mit zumindest einer Barriereschicht, beschichtet wird.

13. Verfahren zur Plasmabehandlung von Oberflächen nach einem der vorstehenden Ansprüche, **dadurch gekennzeichnet, dass** die Oberfläche nach der Plasmabehandlung zumindest abschnittsweise mit einer metallhaltigen, insbesondere einer Titan-, Silizium- und/oder Aluminiumhaltigen Verbindung beschichtet wird.

14. Verfahren zur Plasmabehandlung von Oberflächen nach einem der vorstehenden Ansprüche, **dadurch gekennzeichnet, dass** das Plasma gepulst wird, insbesondere durch Pulsen einer vorzugsweise hochfrequenten elektromagnetischen Strahlung, die das Plasma erzeugt.

15. Verfahren zur Plasmabehandlung von Oberflächen nach einem der vorstehenden Ansprüche, **dadurch gekennzeichnet, dass** der Alkali- oder Erdalkalianteil bis zu einer Tiefe von mindestens 3 nm, vorzugsweise bis zur einer Tiefe von mindestens 20 nm, besonders bevorzugt bis zu einer Tiefe von mindestens 30 nm zumindest in Bezug auf ein Element der Alkali- oder Erdalkaligruppe, vorzugsweise Natrium, zumindest um den Faktor 1,2, vorzugsweise 2,0, besonders bevorzugt 4,0 reduziert wird.

16. Verfahren zur Plasmabehandlung von Oberflächen nach einem der vorstehenden Ansprüche, **dadurch gekennzeichnet, dass** der Schritt des Plasmazündens über einen Zeitraum von 1s bis 3 h, bevorzugt über einen Zeitraum von 35 s bis 10 min durchgeführt wird.

17. Verwendung eines Verfahrens nach einem der vorstehenden Ansprüche zur Reduzierung des Alkali- und/oder Erdalkalianteils zumindest im oberflächennahen Bereich eines Substrates.

18. Substrat, herstellbar, insbesondere hergestellt mit einem Verfahren zur Plasmabehandlung von Oberflächen nach einem der vorstehenden Ansprüche.

19. Substrat nach dem vorstehenden Anspruch, **dadurch gekennzeichnet, dass** das Substrat einen Hohlkörper umfasst.

20. Substrat nach einem der vorstehenden Ansprüche, **dadurch gekennzeichnet, dass** das Substrat als Rohr, insbesondere als Halbzeug für pharmazeutische Packmittel, ausgebildet ist.

21. Substrat nach einem der vorstehenden Ansprüche, **dadurch gekennzeichnet, dass** das Substrat ein Glassubstrat ist und das Glas alkali- oder erdalkalihaltig ist und eines oder mehrere Elemente in folgender Konzentration umfasst:
- 10 bis 40 at-% Si
- 20 bis 70 at-% O
- 0,05 bis 10 at-% B
- 0,01 bis 5 at-% F
- 0,05 bis 10 % at-Al.

22. Substrat nach einem der vorstehenden Ansprüche, **dadurch gekennzeichnet, dass** zumindest in einem plasmabehandelten Bereich des Substrats der Alkali- oder Erdalkalianteil bis in eine Tiefe von 3 nm, vorzugsweise 20 nm, besonders bevorzugt 30 nm zumindest in Bezug auf ein Element der Alkali- oder Erdalkaligruppe, vorzugsweise Natrium, zumindest um den Faktor 1,2, vorzugsweise 2,0, besonders bevorzugt 4,0 reduziert ist.

23. Substrat nach einem der vorstehenden Ansprüche, **dadurch gekennzeichnet, dass** zumindest in einem plasmabehandelten Bereich des Substrats der Natriumanteil bis in eine Tiefe von 3 nm, vorzugsweise 20 nm, besonders bevorzugt 30 nm kleiner als 5 at-%, vorzugsweise kleiner als 1 at-%, besonders bevorzugt kleiner als 0,3 at-% ist.

24. Substrat nach einem der vorstehenden Ansprüche, **dadurch gekennzeichnet, dass** in einem nicht plasmabehandelten Bereich des Substrats der Natriumanteil zwischen 0,1 und 30 at-%, bevorzugt zwischen 10 und 20 at-% liegt.

25. Substrat nach einem der vorstehenden Ansprüche, **dadurch gekennzeichnet, dass** zumindest in einem plasmabehandelten Bereich des Substrats der Calciumanteil bis in eine Tiefe von mindestens 3 nm kleiner als 2 at-%, vorzugsweise kleiner als 0,7 at-%, besonders bevorzugt kleiner als 0,3 at-% ist.

26. Substrat nach einem der vorstehenden Ansprüche, **dadurch gekennzeichnet, dass** in einem nicht plasmabehandelten Bereich des Substrats der Calciumanteil zwischen 0,05 und 30 at-%, bevorzugt zwischen 3 und 20 at-% liegt.

27. Substrat nach einem der vorstehenden Ansprüche, **dadurch gekennzeichnet, dass** zumindest in einem plasmabehandelten Bereich des Substrats der Stickstoffanteil bis in eine Tiefe von mindestens 3 nm größer als 1 at-%, vorzugsweise größer als 2 at-%, besonders bevorzugt größer als 4 at-% ist.

28. Substrat nach einem der vorstehenden Ansprüche, **dadurch gekennzeichnet, dass** in einem nicht plasmabehandelten Bereich des Substrats der Stickstoffanteil geringer als im plasmabehandelten Bereich ist und unter 10 at-%, vorzugsweise unter 4 at-%, besonders bevorzugt unter 1 at-% liegt.

29. Substrat nach einem der vorstehenden Ansprüche, **dadurch gekennzeichnet, dass** das Substrat zumindest abschnittsweise eine Barrierebeschichtung aufweist.

30. Substrat nach dem vorstehenden Anspruch, **dadurch gekennzeichnet, dass** die Barrierebeschichtung zumindest eine SiOₓ-Schicht umfasst.

31. Substrat nach einem der vorstehenden beiden Ansprüche, **dadurch gekennzeichnet, dass** die Barrierebeschichtung eine Dicke zwischen 2 nm und 1 µm, vorzugsweise 5 nm und 300 nm hat.

32. Medikamentenverpackung, insbesondere als Fläschchen, Spritze oder Ampulle, umfassend ein Substrat nach einem der vorstehenden Ansprüche.

33. Display, insbesondere TFT-Display, umfassend ein Substrat nach einem der vorstehenden Ansprüche.

34. Lampenkolben, insbesondere für eine Glühlampe oder Metalldampflampe, umfassend ein Substrat nach einem der vorstehenden Ansprüche.
